**Europäisches Patentamt**

(19) **European Patent Office**

**Office européen des brevets**

(11) Numéro de publication: **0 116 267**
**B1**

(12) # FASCICULE DE BREVET EUROPEEN

(45) Date de publication du fascicule du brevet:
**27.01.88**

(51) Int. Cl.⁴: **B 24 B 1/00,** B 24 B 49/00,
B 23 Q 15/12, B 23 Q 11/00

(21) Numéro de dépôt: **83870123.3**

(22) Date de dépôt: **25.11.83**

(54) Procédé et dispositif pour rectifier une pièce quelconque par enlèvement de matière à l'aide d'une meule.

(30) Priorité: **16.12.82 BE 209743**

(43) Date de publication de la demande:
**22.08.84 Bulletin 84/34**

(45) Mention de la délivrance du brevet:
**27.01.88 Bulletin 88/4**

(84) Etats contractants désignés:
**AT CH DE FR GB IT LI LU NL SE**

(56) Documents cités:
**DE - A - 2 520 946**
**FR - A - 2 103 493**
**GB - A - 1 304 186**
**US - A - 3 634 664**

**VDI ZEITSCHRIFT, vol. 119, no. 6, mars 1977, H. GRAB:**
**"Ratterfreies Arbeiten mit Bohrstangen durch**
**periodische Drehzahlvariation", pages 309-314**
**ENGINEERS' DIGEST, vol. 37, no. 9, septembre 1976,**
**D.A. MILNER: "A review of adaptive control", pages**
**15-23**
**R.SNOEYS :"Onstabiliteit van het Slijpproces",**
**Centrum voor het Wetenschappelijk en Technisch**
**Onder zoek der Metaalverwerkende Nijverheid, Brüssel,**
**Juli 1966**

(73) Titulaire: **CENTRE DE RECHERCHES SCIENTIFIQUES**
**ET TECHNIQUES DE L'INDUSTRIE DES FABRICATIONS**
**METALLIQUES, en abrégé C.R.I.F., Rue des Drapiers, 21,**
**B-1050 Bruxelles (BE)**

(72) Inventeur: **Aerens, Richard, WTCM/CRIF**
**Celestijnenlaan, 300C, B-3030 Heverlee (BE)**
Inventeur: **Smets, Guido, WTCM/CRIF**
**Celestijnenlaan, 300C, B-3030 Heverlee (BE)**
Inventeur: **van den Noortgate, Luk, WTCM/CRIF**
**Celestijnenlaan, 300C, B-3030 Heverlee (BE)**

(74) Mandataire: **De Brabanter, Maurice et al, Bureau**
**VANDER HAEGHEN 63 Avenue de la Toison d'Or,**
**B-1060 Bruxelles (BE)**

## Description

L'invention concerne un procédé de rectification d'une pièce quelconque par enlèvement de matière à l'aide d'une meule, selon lequel on modifie la vitesse de rotation de la meule, en vue de réduire les vibrations de broutement.

L'invention concerne également un dispositif de contrôle des vibrations de rectification mettant en œuvre le procédé susdit.

La rectification est une méthode d'usinage connue qui consiste à enlever de la matière à l'aide d'une meule tournant à une vitesse périphérique comprise entre 15 m/s et 120 m/s pour les rectifieuses les plus performantes. On recourt généralement à la rectification lorsqu'il faut usiner des pièces avec des tolérances très serrées ou obtenir un fini de surface aussi parfait que possible ou encore usiner des pièces ayant subi un traitement de surface, par exemple une trempe après cémentation, de telle manière que leur usinage, par d'autres procédés n'est pas possible.

Suivant les procédés connus, la rectification est le siège de vibrations dites «autoexcitées», c'est-à-dire engendrées par le processus de rectification lui-même.

Ces vibrations faibles au début, croissent rapidement pour atteindre un niveau inacceptable, inconciliable avec la qualité de pièce exigée, niveau de vibrations que l'on connaît communément sous le nom de «broutement».
Pour supprimer le broutement, il faut interrompre l'opération de rectification et dresser la meule selon des procédés connus.

On sait par un article intitulé «Ratterfreies Arbeiten mit Bohrstangen durch periodische Drehzahlvariation» de H. GRAB paru dans le VDI-Zeitschrift, Vol. 119 N° 6, en mars 1977 aux pages 309 à 314, que certains auteurs ont pu observer qu'il se forme sur le pourtour de la meule après quelques minutes, lors d'opérations de rectification en plongée, des marques d'usure en forme d'ondulations, provoquées par le broutement. Ces marques d'ondulation sont éliminées lorsqu'on varie la vitesse de rotation après quelque temps. Il se forme d'autres marques ailleurs. L'article mentionne cependant que cette méthode n'a acquis aucune importance en pratique, parce que cet effet d'usure n'apparaît pas lorsqu'on dresse la meule à temps.

Raymond SNOEYS, un des auteurs cité dans l'article susdit décrit en effet dans sa thèse de doctorat intitulée «Instabiliteit van het slijpproces» publié en 1966 par «Centrum voor het weetenschoppelijk en technisch onderzoek der materialwerkende hijverheid», Brussel, les essais qu'il a effectués en vue de déterminer l'influence d'une variation cyclique, à savoir en dents de scie, de la vitesse de rotation de la meule sur la fréquence et l'amplitude des vibrations du broutement.

Dans une première série d'essais, la vitesse de rotation a été progressivement augmentée à raison de 2,5% par minute, de manière à croître de 25% en 10 minutes et puis brusquement diminuée à la valeur initiale. Les résultats indiquent qu'une croissance lente de la vitesse provoque une diminution instantanée de l'amplitude de broutement. Dans une seconde série d'essais, les variations de vitesse sont effectuées de manière inversée, augmentations instantanées et diminutions progressives de la vitesse de rotation dans des intervalles de temps programmés. On constate que la seconde série d'essais a donné les résultats les plus intéressants, en ce sens que la croissance moyenne de l'amplitude des vibrations de broutement fut la plus faible, cependant l'inconvénient suivant s'impose:

le broutement atteint une amplitude inacceptable après déjà 6 à 7 minutes.

En pratique, la solution suggérée par SNOEYS permet simplement de retarder l'opération de dressage en allongeant la période de travail de la meule.

Toute opération de dressage est en elle-même coûteuse parce qu'elle dure longtemps et parce que l'abrasif que l'on élimine par ce dressage est lui-même coûteux, particulièrement lorsque l'abrasif de la meule est du nitrure de bore cubique ou du diamant.

La présente invention a pour but de remédier aux inconvénients décrits ci-dessus. A cet effet, elle permet de résoudre le problème de la maîtrise des vibrations de rectification. Elle maintient l'amplitude des vibrations dues au broutement à un niveau tellement faible que toute opération de dressage devient superflue. Elle permet donc de supprimer tout simplement les opérations de dressage, tout en procurant au fini de surface la qualité requise.

Ce procédé est essentiellement caractérisé en ce qu'on modifie la vitesse de rotation de la meule chaque fois que le niveau de vibrations de broutement associé à cette vitesse est atteint, afin de maintenir ledit niveau de vibrations sous un seuil acceptable pour la qualité de fini de rectification recherchée. Il s'ensuit que les intervalles de temps entre deux variations consécutives sont aléatoires.

Suivant une particularité de l'invention, on modifie la vitesse de rotation de la meule d'un facteur compris entre 1,6 et 2,2.

Suivant une autre particularité de l'invention, les variations de vitesse sont réalisées brutalement.

L'invention concerne un dispositif de contrôle des vibrations de rectification. Ce dispositif comporte un capteur de vibrations, un amplificateur des signaux de vibrations, un filtre, un convertisseur et un circuit logique mettant en œuvre le procédé précité.

Dans une forme particulière de réalisation de l'invention, ledit appareil comporte au moins trois comparateurs, deux circuits de déclenchement, un dispositif de sélection des données, deux dispositifs de temporisation et des multivibrateurs monostables pour réenclencher lesdits dispositifs de temporisation.

L'appareil comporte avantageusement un premier dispositif de temporisation monté dans un circuit de commutation ne laissant passer des signaux de vibrations supérieurs en intensité aux signaux de référence que d'une durée supérieure à 400 millisecondes, afin d'éviter les changements intempestifs des conditions de vitesse et un second dispositif de temporisation qui génère une impulsion dont la durée est réglable dans un intervalle de temps allant de 5 secondes à 5 minutes de manière à maintenir la vitesse de rotation constante pendant au moins ledit intervalle de temps.

D'autres particularités et détails de l'invention ressortiront de la description suivante des dessins annexés au présent mémoire, qui représentent une forme de réalisation du dispositif de contrôle suivant l'invention.

Dans ces dessins:

- la figure 1 montre le schéma de principe de la partie analogique du dispositif de contrôle suivant l'invention;

- les figures 2A et 2B montrent les éléments constitutifs de l'amplificateur et du filtre montré à la figure 1;

- la figure 3 représente le convertisseur à pont complet et la sortie tampon destinée à l'enregistrement montré à la figure 1;

- la figure 4 montre le schéma de principe de la partie digitale dudit dispositif de contrôle;

- les figures 5 et 6 illustrent de manière plus détaillée la partie digitale du dispositif de contrôle suivant l'invention;

- les figures 7 et 8 représentent respectivement les dispositifs générateurs des tensions de référence supérieur et inférieur;

- la figure 9 montre le schéma de fonctionnement de la partie digitale de contrôle suivant l'invention;

- la figure 10 montre le dispositif de commutation commandant la vitesse de la meule.

Le dispositif de contrôle suivant l'invention comporte deux parties:

- la partie analogique qui sert à traiter les signaux d'un capteur de vibrations constitué généralement d'un accéléromètre. Ces signaux sont transformés en signaux utilisables dans la partie digitale;

- la partie digitale qui sert à faire changer la vitesse de meule suivant la logique décrite précédemment.

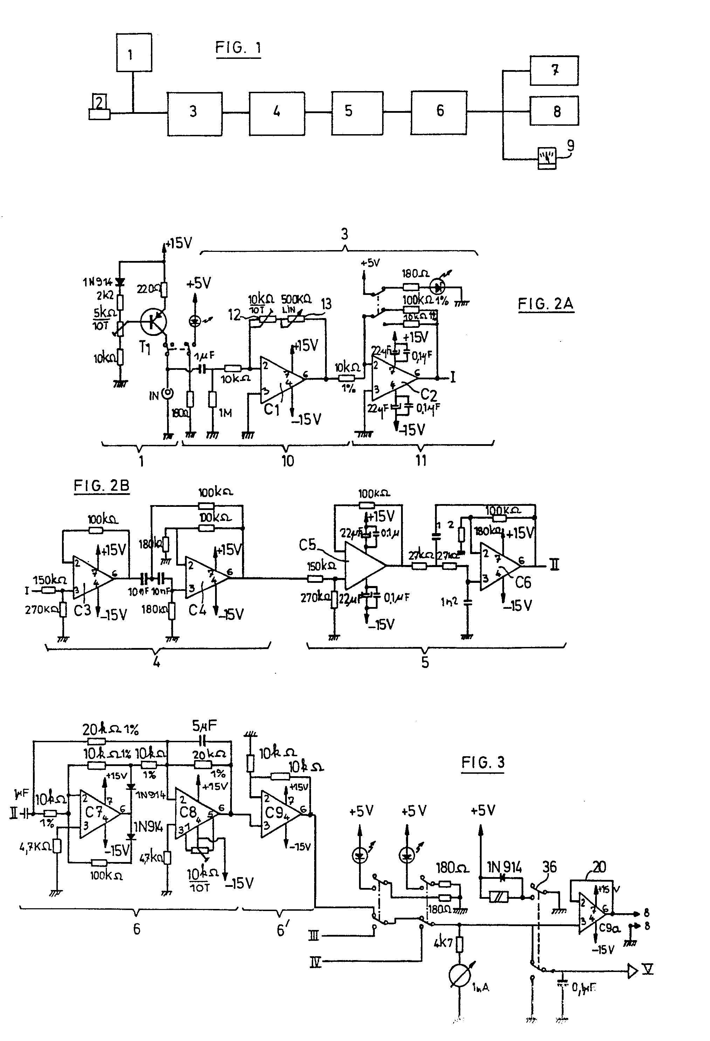

Une vue schématique d'ensemble de la partie analogique du dispositif de contrôle suivant l'invention est donnée à la figure 1. L'appareil comporte une source de courant 1, un capteur de vibrations 2, un amplificateur 3, un filtre passe-haut 4, un filtre passe-bas 5, un convertisseur 6, une sortie vers un circuit logique (partie digitale) 7 et une sortie tampon 8 destinée, par exemple, à un enregistreur et un milliampèremètre 9.

Le signal de vibration est capté par un accéléromètre 2 à quartz compatible avec le dispositif de contrôle qui est décrit dans le présent mémoire et auquel il est raccordé par la fiche IN.

Le signal de vibration est amplifié jusqu'à 500 fois en deux étapes.

La première étape d'amplification réglable continûment s'effectue dans le dispositif 10 avec le facteur 1 à 50, la seconde étape avec le facteur 1 à 10 dans le dispositif 11. Les facteurs d'amplification sont choisis au moyen des potentiomètres 12 et 13.

Le signal amplifié est envoyé vers un filtre destiné à éliminer d'une part les hautes fréquences (dispositif 5) dues au bruit et à la commande par thyristors non montrée sur les figures ci-jointes et d'autre part les basses fréquences parasites (dispositif 4 sur la figure 2B) induits par le système hydraulique, qui n'est pas non plus représenté.

A la sortie du filtre, le signal est redressé dans le convertisseur AC-DC 6, dont la tension de sortie est intégrée dans le temps (figure 3). Un réglage de la déviation du courant continu est prévu de telle sorte qu'à une tension nulle d'entrée correspond une tension nulle à la sortie. Un second amplificateur 6′ montré à la figure 3 est destiné à obtenir une tension continue acceptable pour la partie digitale de l'appareil.

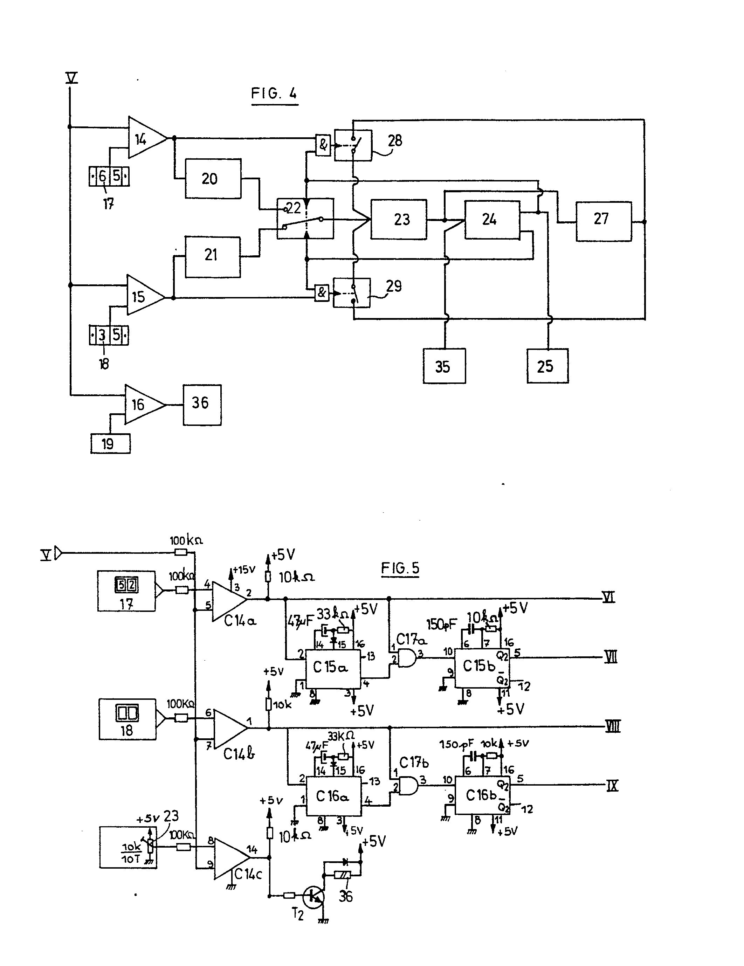

Le schéma de principe de la partie digitale est montré à la figure 4.

Le signal de vibrations redressé est envoyé vers trois comparateurs 14, 15 et 16 dans lesquels il est comparé aux niveaux de vibrations relatifs affichés pour lesquels on veut que la vitesse de meule change (comparateurs 14 et 15) ou qu'un dispositif d'alarme soit enclenché (comparateur 16).

Les tensions de référence des deux premiers comparateurs 14 et 15 sont produites par des diviseurs de tension réglés par des roues encodeuses 17 et 18 et lorsque le signal des vibrations est supérieur ou égal à la valeur affichée, la sortie du comparateur est haute (5V).

Le comparateur 16, dont la tension de référence est réglée par un potentiomètre 19, détermine le niveau d'alarme maximal que les signaux de vibration ne peuvent franchir sans l'arrêt de la rectifieuse.

Un premier circuit de déclenchement 20 génère une impulsion lorsque le niveau d'entrée (provenant du comparateur) est resté haut plus de 400 millisecondes afin d'éviter les changements intempestifs des conditions de vitesse génère une impulsion pour chacun des signaux de vibration reçus et restés suffisamment longtemps hauts. Un second circuit de déclenchement 21, analogue au premier, génère une impulsion, lorsque le niveau d'entrée est resté haut durant plus de 400 millisecondes.

Un dispositif de sélection des données 22 laisse passer soit les impulsions «hautes», soit les impulsions «basses» suivant l'état d'un sélecteur de vitesse.

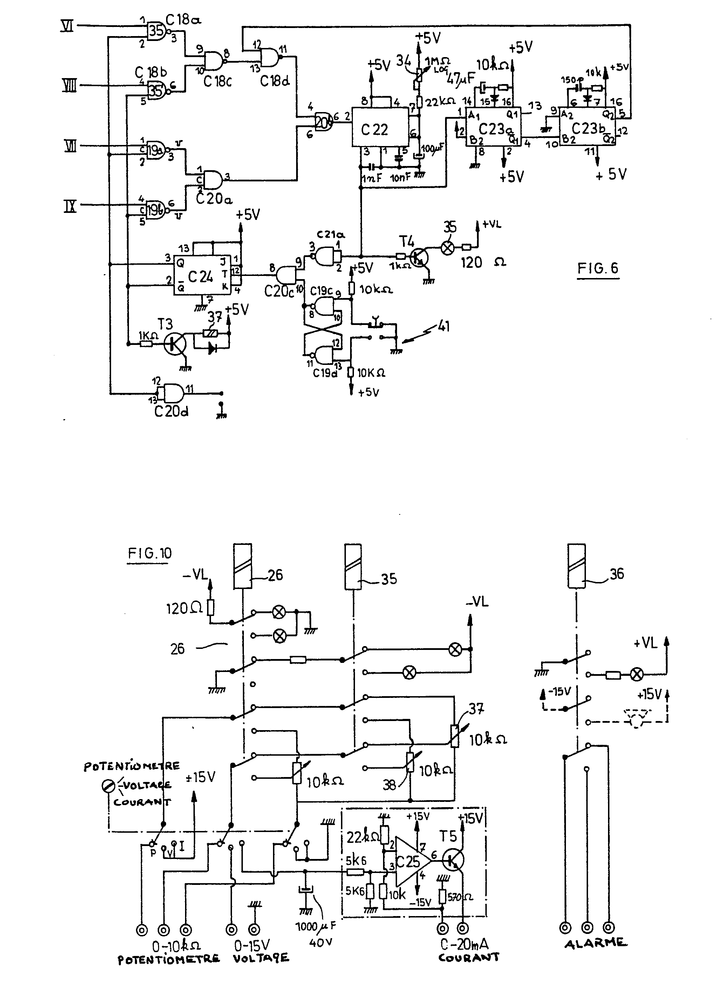

Un dispositif de temporisation 23 constitué d'un circuit qui, lorsqu'il reçoit une impulsion génère une nouvelle impulsion dont la durée est réglable dans un intervalle de temps allant de 5 secondes à 5 minutes, (Fig. 6) envoie cette impulsion vers un sélecteur de vitesse 24.

Le sélecteur de vitesse 24 est constitué d'un Flip-Flop, qui change d'état à chaque période pendant la naissance du flanc montant d'une pulsation d'entrée générée par le circuit 23.

L'impulsion générée par l'un des circuits de déclenchement 20 ou 21 enclenchent le dispositif de temporisation 23 et inversent l'état du sélecteur de vitesse 24 et du dispositif de sélection 22.

Le sélecteur de vitesse 24 restera bloqué dans sa position pendant la durée de l'impulsion générée par le dispositif de temporisation 23.

La partie digitale comporte également un contacteur de vitesse constitué d'un relais 25, actionne par le sélecteur de vitesse 24 et qui commande le changement de vitesse de la meule. L'ensemble est conçu de telle manière que la meule tourne à vitesse plus faible lorsque le relais 25 est au repos et plus élevée lorsque le relais 25 est excité.

A la fin de la période de temporisation du dispositif 23, un circuit de redémarrage 27 génère une impulsion qu'il envoie aux portes 28 et 29 qui, lorsque les deux entrées sont hautes, transmettant cette dernière au dispositif de temporisation pour le réenclencher. Cet état est rencontré, par exemple, lorsqu'à une vitesse de rotation élevée de la meule, le niveau de vibration est supérieur au niveau de déclenchement qui lui est associé.

La partie digitale est montrée de manière plus détaillée aux figures 5, 6, 7 et 8. Le signal des vibrations est amené aux trois comparateurs 14, 15 et 16.

Les tensions de référence des deux premiers comparateurs 14 et 15 sont produits par des diviseurs de tension, réglés par des roues encodeuses 17, 18.

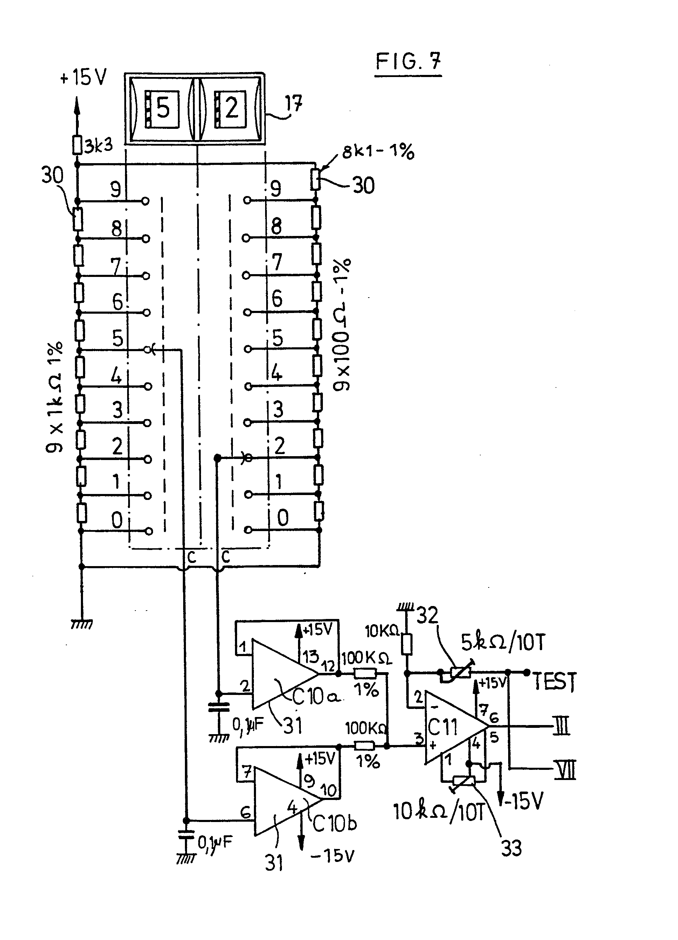

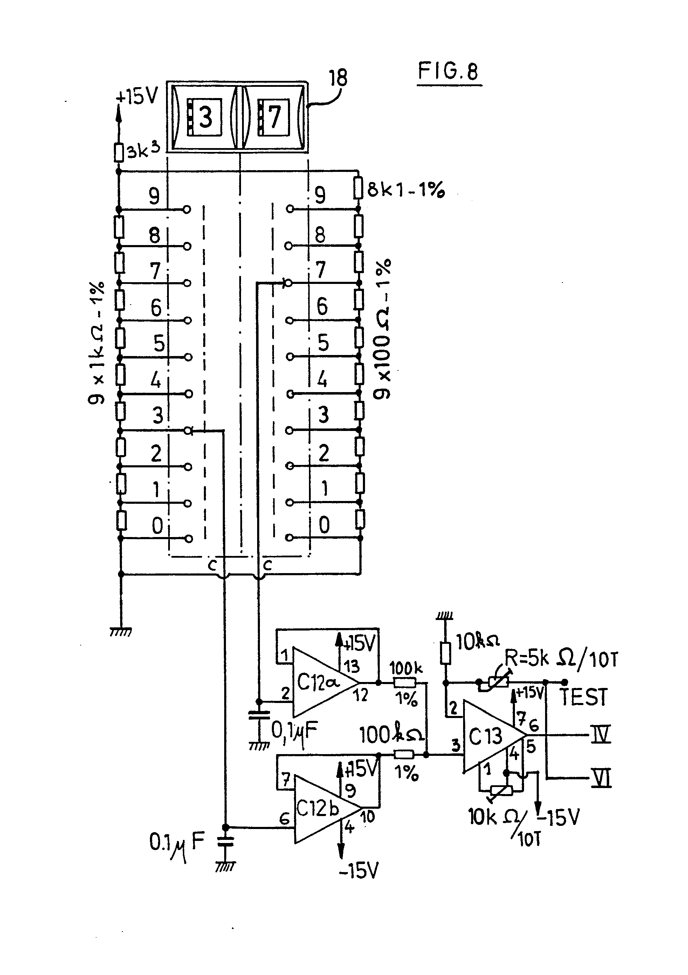

Les diviseurs de tension pour les unités et les dizaines sont réalisés à partir de résistances de précision 30 (1%). Leur influence mutuelle est éliminée par deux tampons 31, puis les deux tensions sont additionnées (figures 7 et 8).

On peut régler les diviseurs de tension à l'aide des potentiomètres de réglage 32.

La tension de compensation est réglée à l'aide d'un potentiomètre de réglage 33. Un relais 36' commandant le dispositif d'alarme est actionné par l'intermédiaire d'un transistor T2.

Si le signal de vibrations est supérieur ou égal à la tension de référence affichée dans un des comparateurs C14a, C14b, sa sortie est haute (5V).

Chacun des circuits de déclenchement 20, 21 comporte deux multivibrateurs monostables C15a, C15b et C16a, C16b et une porte C17a respectivement C17b constitués de circuits intégrés, assemblés de manière à générer une impulsion, lorsque le niveau à l'entrée est resté haut pendant un intervalle de temps suffisant. Cet intervalle doit être supérieur à 400 millisecondes.

Lors du passage d'un niveau de référence supérieur le flanc montant enclenche le premier multivibrateur monostable C15a (fig. 5) qui émet une impulsion de 400 ms.

Si l'entrée 1 de la porte «AND» C17a constituée par exemple d'un circuit intégré est encore à l'état haut après 400 ms, un second multivibrateur monostable C15b est enclenché et il émet à son tour une impulsion. Il en est de même lors du passage d'un niveau de référence inférieur pour enclencher un premier multivibrateur C16a émettant une impulsion de 400 ms et susceptible d'enclencher un second multivibrateur C16b.

Des portes C19a, C19b et C20a (fig. 6) forment le dispositif de sélection des données 22. Selon l'état d'un Flip-Flop C24, la porte C19a ou C19b sera ouverte. Les impulsions fournies par les circuits intégrés C19a et C19b sont inversés pour pouvoir utiliser les portes «AND» C20a et C20b comme porte «OR».

Le flanc descendant de l'impulsion via immédiatement enclencher le dispositif de temporisation C22 qui émet une impulsion dont la durée est réglable au moyen d'un potentiomètre 34. Cette impulsion inversera le Flip-Flop C24 en passant par l'inverseur C21a et la porte C20c.

Aussi longtemps que l'impulsion du dispositif de temporisation est présente, le Flip-Flop C24 reste bloqué et ce blocage est signalé à l'utilisateur par une lampe 35.

Le dispositif de temporisation bloquera alors pendant un intervalle de temps de durée prédéterminée variant de 5s à 5 min le Flip-Flop du dispositif de sélection.

La sortie du dispositif de temporisation 23 est aussi reliée à des multivibrateurs monostables C23a et C23b, ceci dans le but de redémarrer le dispositif de temporisation avec un léger retard, du moins lorsque la porte C18d est ouverte.

A cet effet, deux conditions doivent être remplies:

a) pour la porte C18a:
– la vitesse de meule doit être élevée; (sortie $\overline{Q}$ du Flip-Flop C24 est à l'état haut);
– le signal de vibration doit être supérieur à la valeur de référence (comparateur 14 est à l'état haut);
lorsque les deux entrées de C18a sont hautes, sa sortie est par conséquent basse, comme la sortie de C18b est basse puisque la sortie $\overline{Q}$ du Flip-Flop C24 est basse, la sortie de C18c est haute;

b) pour la porte C18b:
– la vitesse de meule doit être basse ($\overline{Q}$ du Flip-Flop C24 est à l'état haut);
– le signal de vibration doit être supérieur à la valeur de référence (comparateur 15 est à l'état haut); lorsque les deux entrées de C18b sont basses, sa sortie est par conséquent basse; étant donné que l'entrée de C18a est basse, $\overline{Q}$ du Flip-Flop C24 est basse, la sortie de C18c est haute.

Un interrupteur 41 relié du Flip-Flop permet de changer manuellement la vitesse de meule.

Un dispositif d'alarme 36 constitué d'un relais 36' commandé par le comparateur 16 signale la présence de vibrations de niveau supérieur ou égal au niveau ultime toléré et arrête éventuellement la rectifieuse.

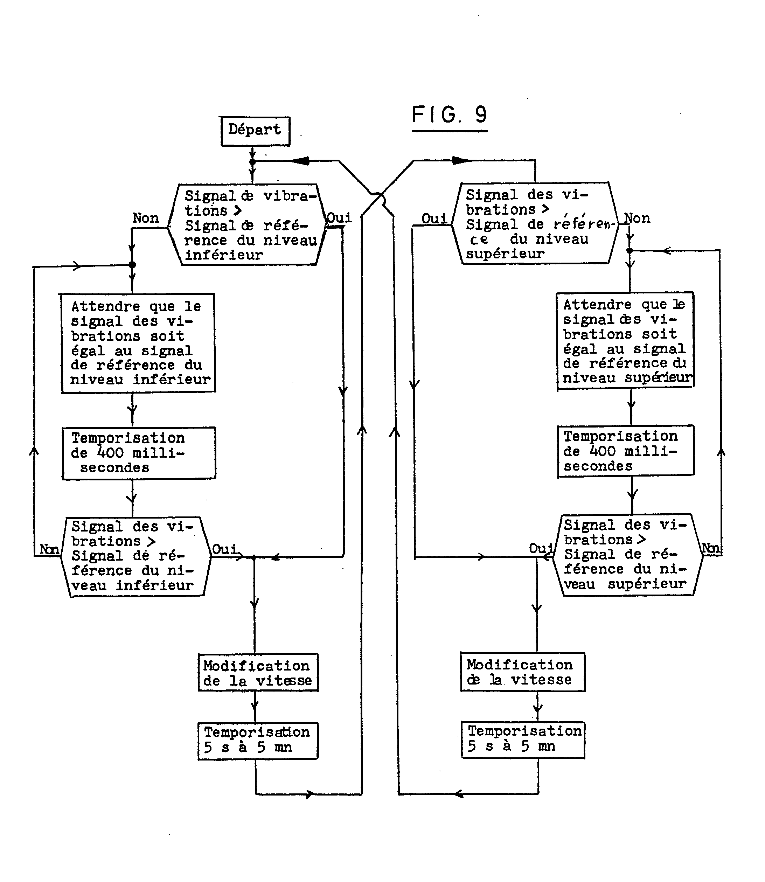

Le fonctionnement de l'appareil décrit cidessus peut s'expliquer de la manière suivante, à l'aide du schéma de fonctionnement représenté à la figure 9.

Si la rectifieuse est enclenchée à une vitesse basse, le sélecteur de vitesse 24, bloqué par le dispositif de temporisation 23 influence le dispositif de sélection de données 22, de manière à ce que celui-ci ne laisse passer que des impulsions du niveau inférieur.

Au moment où le signal de vibration d'entrée capté par l'accéléromètre 2 dépasse la tension de référence, la sortie du comparateur 15 est haute (5 volts).

Si l'impulsion dure plus de 400 millisecondes, le circuit de déclenchement 21 émet une impulsion. Cette impulsion est transmise par le dispositif de sélection des données 22 vers le dispositif de temporisation 23. Cette impulsion enclenche le dispositif de temporisation 23 et inverse l'état du sélecteur de vitesse 24. Cette inversion d'état du sélecteur de vitesse 24 excite le relais 26 constituant le contacteur de vitesse 25 et provoque le changement de vitesse de rotation de la meule. Au même moment, le dispositif de sélection des données 22 est inversé. Ce dispositif ne laisse alors plus passer que les impulsions provenant du comparateur 14 des signaux des vibrations avec la tension de référence élevée. Le dispositif de temporisation 23 empêche toute nouvelle variation de la vitesse de la meule durant un intervalle de temps de durée prédéterminée.

Au moment où le signal des vibrations atteint la tension de référence affichée via la roue encodeuse, le dispositif de déclenchement 20 émet une impulsion qui est transmise par le dispositif de sélection des données 22 vers le dispositif de temporisation 23. Cette impulsion enclenche le dispositif de temporisation 23 et inverse le sélecteur de vitesse 24.

Le cycle de fonctionnement recommence.

On relie le multivibrateur 27 monostable aux portes 28, 29 comme illustré à la figure 4.

Le réglage du dispositif de contrôle s'effectue en trois étapes:
1. choix d'un niveau maximal de vibrations;
2. choix des niveaux critiques de vibrations;
3. temporisation.

Les opérations doivent se faire dans l'ordre 1-2-3. Lors d'un changement de type de pièce, on sera peut-être amené à modifier ces réglages tout au moins en ce qui concerne le premier, mais il est peu probable qu'il faille modifier les autres.

Pour pouvoir effectuer le réglage n° 1, c'est-à-dire choisir un niveau maximal de vibrations et lorsque, à priori, on n'a aucune information sur la valeur de ce niveau, il faut rectifier une pièce de celles pour lesquelles on entreprend les opérations de rectification. Ce n'est que sur base de ces indications que l'on pourra effectuer les réglages.

Il faut insister sur le fait que cette première rectification doit se faire dans des conditions de rectification correctes:
– meule parfaitement équilibrée;
– meule parfaitement dressée et mise au rond;
– pièce ébauchée.

S'il s'agit de meule CBN, ajoutons que la meule doit être correctement avivée.

Au moment du démarrage, l'appareil doit toujours se trouver en position basse vitesse (pour des raisons de sécurité). C'est donc le potentiomètre 37 qui est activé.

Il y a 2 vitesses de meule à régler:
– une basse vitesse à l'aide du potentiomètre 37;
– une haute vitesse à l'aide du potentiomètre 38.

Ces 2 vitesses doivent être telles qu'elles diffèrent d'un facteur compris entre 1,6 et 2,2.

Dans la plupart des rectifieuses, le variateur de vitesse comporte un convertisseur de fréquences. On obtient la variation de vitesse en faisant varier au départ soit une tension, soit un courant, soit une résistance par exemple à l'aide d'un potentiomètre. Comme montré à la figure 10, le dispositif suivant l'invention peut s'adapter aux trois possibilités.

Il est toutefois évident que l'homme de métier peut éventuellement modifier ledit dispositif pour mieux adapter celui-ci à des caractéristiques propres d'un variateur de vitesse, sans pour autant sortir du cadre de l'invention déterminé par les revendications suivantes.

**Revendications**

1. Procédé de rectification d'une pièce quelconque par enlèvement de matière à l'aide d'une meule, selon lequel on modifie la vitesse de rotation de la meule chaque fois qu'un certain niveau de vibrations de broutement associé à une vitesse donnée est atteint, afin de maintenir le niveau de vibrations de broutage sous un seuil acceptable pour la qualité de fini de rectification recherché.

2. Procédé suivant la revendication 1, caractérisé en ce qu'on modifie la vitesse de rotation de la meule d'un facteur compris entre 1,6 et 2,2.

3. Procédé suivant la revendication 1 ou 2, caractérisé en ce qu'on impose comme contrainte que la période minimale de fonctionnement à un nouveau régime de vitesse est comprise entre 5 secondes et 5 minutes.

4. Procédé suivant l'une quelconque des revendications précédentes, caractérisé en ce que les variations de vitesse sont réalisées brutalement.

5. Dispositif de contrôle des vibrations de rectification comportant un capteur de vibrations (2), un amplificateur des signaux de vibrations (3), un filtre (4, 5), un convertisseur (6) et un circuit logique (7) mettant en œuvre le procédé suivant l'une quelconque des revendications précédentes.

6. Dispositif de contrôle suivant la revendication 5, caractérisé en ce que ledit circuit logique (7) comporte au moins trois comparateurs (14, 15, 16), deux circuits de déclenchement (20, 21), un dispositif de sélection des données (22), deux dispositifs de temporisation (23) et des multivibrateurs monostables (26) pour réenclencher lesdits dispositifs de temporisation (23, 23').

7. Dispositif de contrôle suivant l'une quelconque des revendications 5 ou 6, caractérisé en ce qu'il comporte un premier dispositif de temporisation (23), monté dans un circuit de commutation ne laissant passer des signaux de vibrations supérieurs en intensité aux signaux de référence que d'une durée supérieure à 400 millisecondes, afin d'éviter les changements intempestifs des conditions de vitesse et un second dispositif de temporisation (23'), qui génère une impulsion dont la durée est réglable dans un intervalle de temps prédéterminé allant de 5 secondes à 5 minutes, de manière à maintenir la vitesse de rotation constante pendant au moins ledit intervalle de temps.

## Claims

1. Process for truing any part by the removal of material using a grinding wheel, according to which the speed of rotation of the grinding wheel is modified each time that a certain level of chattering vibrations associated with a given speed is reached, in order to maintain the level of chattering vibrations below an acceptable threshold for the sought finished truing quality.

2. Process according to Claim 1, characterized in that the speed of rotation of the grinding wheel is modified by a factor of between 1.6 and 2.2.

3. Process according to Claim 1 or 2, characterized in that it is imposed as a limitation that the minimum period of operation at a new operating speed is between 5 seconds and 5 minutes.

4. Process according to any one of the preceding claims, characterized in that the speed variations are carried out suddenly.

5. Device for controlling truing vibrations, including a vibration sensor (2), a vibration signal amplifier (3), a filter (4, 5), a converter (6) and a logic circuit (7) implementing the process according to any of the preceding claims.

6. Control device according to Claim 5, characterized in that the said logic circuit (7) includes at least three comparators (14, 15, 16), two trigger circuits (20, 21), a data selection device (22), two timing devices (23) and monostable multivibrators (26) for restarting the said timing devices (23, 23').

7. Control device according to either of Claims 5 or 6, characterized in that it includes a first timing device (23), connected in a switching circuit allowing to pass only vibration signals of intensity higher than the reference signals of a duration longer than 400 milliseconds, in order to avoid untimely changes in speed conditions and a second timing device (23'), which generates a pulse whose duration is adjustable over a predetermined time interval of from 5 seconds to 5 minutes, in order to maintain the speed of rotation constant during at least the said time interval.

## Patentansprüche

1. Verfahren zur Oberflächenverbesserung irgendeines Stücks durch Entfernen von Werkstoff mittels einer Schleifscheibe, bei welchem man die Rotationsgeschwindigkeit der Schleifscheibe jedes Mal, wenn ein bestimmter, einer gegebenen Geschwindigkeit zugeordneter Ratter-Vibrationsgrad erreicht ist, verändert, um den Ratter-Vibrationsgrad unter einer für die Ausführungsqualität der gewünschten Oberflächenverbesserung akzeptablen Schwelle zu halten.

2. Verfahren nach Anspruch 1, dadurch gekennzeichnet, dass man die Rotationsgeschwindigkeit der Schleifscheibe um einen Faktor zwischen 1,6 und 2,2 verändert.

3. Verfahren nach Anspruch 1 oder 2, dadurch gekennzeichnet, dass man als zwingend auferlegt, dass die minimale Funktionsdauer bei einem neuen Geschwindigkeitsbereich zwischen 5 Sekunden und 5 Minuten beträgt.

4. Verfahren nach einem der vorhergehenden Ansprüche, dadurch gekennzeichnet, dass die Geschwindigkeitsveränderungen plötzlich erfolgen.

5. Vorrichtung zum Kontrollieren der Vibrationen einer Oberflächenverbesserung, umfassend einen Vibrationsaufnehmer (2), einen Verstärker der Vibrationssignale (3), einen Filter (4, 5), einen Umsetzer (6) und eine logische Schaltung (7) zur Durchführung des Verfahrens nach einem der vorhergehenden Ansprüche.

6. Kontrollvorrichtung nach Anspruch 5, dadurch gekennzeichnet, dass die logische Schaltung (7) mindestens drei Vergleicher (14, 15, 16), zwei Abschaltkreise (20, 21), eine Datenauswahleinrichtung (22), zwei Verzögerungseinrichtungen (23) und monostabile Multivibratoren (26) zum Wiedereinschalten der Verzögerungseinrichtungen (23, 23') umfasst.

7. Kontrollvorrichtung nach einem der Ansprüche 5 oder 6, dadurch gekennzeichnet, dass sie eine erste Verzögerungseinrichtung (23) umfasst, die in einem Umschaltkreis montiert ist, der nur Vibrationssignale durchlässt, die in der Intensität um eine Dauer von mehr als 400 Millisekunden höher sind als die Referenzsignale, um ungewollte Änderungen der Geschwindigkeitsbedingungen zu vermeiden, und eine zweite Verzögerungseinrichtung (23'), die einen Impuls erzeugt, dessen Dauer innerhalb eines bestimmten Zeitintervalls von 5 Sekunden bis 5 Minuten derart regulierbar ist, dass zumindest während dieses Zeitintervalls die Rotationsgeschwindigkeit konstant gehalten wird.

FIG. 1

FIG. 2A

FIG. 2B

FIG. 3

FIG. 4

FIG. 5

0 116 267

FIG.6

FIG.10

11

FIG. 7

FIG.8

0 116 267

15

## FIG. 9

```
                    ┌──────────┐
                    │  Départ  │
                    └──────────┘
```

Signal de vibrations >
Signal de référence du niveau
inférieur

Signal des vibrations >
Signal de référence du niveau
supérieur

Non          Oui          Oui          Non

Attendre que le
signal des vibrations soit
égal au signal
de référence du
niveau inférieur

Attendre que le
signal des vibrations soit
égal au signal
de référence du
niveau supérieur

Temporisation
de 400 millisecondes

Temporisation
de 400 millisecondes

Signal des vibrations >
Signal de référence du niveau inférieur

Signal des vibrations >
Signal de référence du niveau supérieur

Non          Oui          Oui          Non

Modification
de la vitesse

Modification
de la vitesse

Temporisation
5 s à 5 mn

Temporisation
5 s à 5 mn

17